# EUROPÄISCHE PATENTSCHRIFT

(11) **EP 1 210 866 B1**
(45) Veröffentlichungstag und Bekanntmachung des Hinweises auf die Patenterteilung: **05.04.2006**
(21) Anmeldenummer: 01128745.5
(22) Anmeldetag: 03.12.2001
(51) Int. Cl.: A01G 9/10

(54) **Verpresster Formkörper**
Pressed moulded body
Corps moulé compressé

(30) Priorität: 04.12.2000 DE 10060158
(43) Veröffentlichungstag der Anmeldung: 05.06.2002
(73) Patentinhaber: Blieninger Holzspäne GmbH, 84137 Vilsbiburg (DE)
(72) Erfinder: Blieninger, Franz, 84034 Landshut (DE)
(74) Vertreter: Westendorp, Michael Oliver

(56) Entgegenhaltungen:
- EP-A- 0 288 384
- DE-A- 2 812 923
- DE-A- 19 855 283
- FR-A- 2 445 103

## Beschreibung

### Hintergrund der Erfindung:

Die Erfindung betrifft einen verpressten Formkörper, enthaltend mindestens einen Funktionsstoff, ausgewählt aus der Gruppe der Holzfaserstoffe, zellstoffhaltigen Materialien und/oder Kokosmesokarpmaterialien, mit einer Dichte von maximal 550 g/l, ein Verfahren zu dessen Herstellung sowie dessen Verwendung, insbesondere zur Anzucht bzw. Kultivierung von Pflanzen. Die Erfindung betrifft weiterhin ein Verfahren zum optimalen Befüllen eines Pflanzgefäßes mit einem verpressten Formkörper.

Im Stand der Technik sind zahlreiche stark verpresste Formkörper zur Anzucht bzw. Kultivierung von Pflanzen bekannt.

So beschreibt die US-Patentschrift 3,883,989 einen Formkörper aus Torf, dem als Bindemittel Bitumen beigemengt wird und der typischerweise auf ein Achtel bis ein Zwölftel des Urgprungsvolumens verdichtet wird. Das Bindemittel sorgt nach dem Quellen dafür, dass die Form als weicher "Kuchen" erhalten bleibt.

Die US-Patentschrift 3,375,607 beschreibt ebenfalls hochverpresste Briketts aus Torf (peat moss). Das Brikett wird in ein Netz gepresst, welches auch die Form nach dem Aufquellen bestimmt.

Die EP 0,063,903 beschreibt einen Substratblock, dessen Ränder stärker verpresst sind als der zentrale Bereich, wodurch ein formstabiler Körper erzeugt wird. Die Oberseite des Blocks ist mit einer porösen, flexiblen, die Oberfläche bindenden Schicht (z.B. einem Kunststoffnetz) versehen, die den Formkörper nach dem Bewässern und Quellen in Form halten soll.

Im Stand der Technik sind neben Torf zahlreiche andere Pflanzsubstratmaterialien bekannt, wie beispielsweise Reiskornschalen (vgl. EP-A-0,355,250), humushaltiges Material (vgl. WO 97/19585), Kokosfaser-Mesokarp (vgl. WO 97/48270) oder Mineralwolle (vgl. DE 4,225,839).

Die FR-A-2 445 103 betrifft ein neuartiges zusammengesetztes Material, das als Kultursubstrat brauchbar ist, das überwiegend aus biologisch abbaubarem Material besteht, allgemein eine Dichte zwischen 0,15 g/cm³ und 0,25 g/cm³ aufweist und als homogener Block vorliegt.

Die DE-A-198 55 283 betrifft einen Formkörper und ein Verfahren zur Herstellung des Formkörpers, bestehend aus 20 bis 50 Gew.-% proteinhaltigen Rohstoffen, 45 bis 65 Gew.-% Wasser, 5 bis 40 Gew.-% Pflanzenfasern, 5 bis 20 Gew.-% mineralischen Stoffen und 1 bis 10 Gew.-% Nährstoffen.

Nachteilig an den Pflanzsubstraten bzw. den daraus hergestellten hochverdichteten Formkörpern ist, dass sie aufgrund der Eigenschaften der verwendeten Materialien und/oder der hohen Verpressung ein zu geringes Quellvermögen aufweisen. Weiterhin setzt die Quellung häufig verzögert ein, so dass sich zu lange Quellzeiten ergeben. Auch ist die Beschaffenheit vieler bekannter Formkörper nicht ideal auf das Pflanzen- bzw. Wurzelwachstum abgestimmt.

Aufgabe der Erfindung war somit die Bereitstellung eines Formkörpers, der die Nachteile des Standes der Technik vermeidet und ein hohes und rasches (spontanes) Quellvermögen mit einer guten Wiederbenetzbarkeit und Wasserleitfähigkeit, einer guten Stabilität und Festigkeit des Formkörpers sowie guten Pflanzen- und Wurzelwachstumsbedingungen (nach Wasserzugabe) vereint.

Diese Aufgabe wird durch einen verpressten Formkörper gemäß Anspruch 1 gelöst.

So wurde überraschend gefunden, dass durch die Verwendung mindestens eines sog. Funktionmaterials, ausgewählt aus der Gruppe der Holzfaserstoffe, zellstoffhaltigen Materialien und/oder Kokosmesokarpmaterialien ein besonders vorteilhafter Formkörper erhalten wird, wenn die Verpressung so gewählt wird, dass sich eine Dichte von maximal 550 g/l ergibt.

Es wurde weiterhin überraschend gefunden, dass derartige verpresste Formkörper eine sehr hohe spontane Quellfähigkeit aufweisen und nach 1 bis 2 Minuten größtenteils bzw. vollständig ihr gewünschtes Endvolumen erreicht haben. Es zeigte sich, dass weder ohne Funktionsmaterialien, noch bei einer Dichte des verpressten Formkörpers von mehr als 550 g/l die erfindungsgemäßen vorteilhaften Eigenschaften erzielt werden können.

Nach einer bevorzugten Ausführungsform weist der Formkörper eine Dichte zwischen 300 g/l und 500 g/l, insbesondere zwischen 350 g/l und 450 g/l, auf. Es wurde gefunden, dass in diesem Dichtebereich das Quellverhalten des Formkörpers besonders gut ist und eine rasche und hohe Quellfähigkeit ermöglicht. Weiterhin ermöglicht eine Verpressung auf mindestens etwa 300 g/l die Bereitstellung kompakter Formkörper und somit einen leichten Transport und eine einfachere Handhabung durch den Verbraucher, der keine sperrigen und großvolumigen Säcke oder Beutel tragen muss. Weiterhin wird durch die hohe Quellfähigkeit der erfindungsgemäßen Formkörper sichergestellt, dass durch einen leicht handhabbaren kleinen Formkörper ein verhältnismäßig großes Pflanzgefäß vollständig befüllt werden kann.

Es sind technisch auch ohne weiteres großvolumige Presskörper mit einem Ursprungsvolumen von 50 Litern oder mehr möglich. Entscheidend hierfür ist, dass es mit den erfindungsgemäßen verpressten Formkörpern möglich ist, diese trotz der relativ geringen Oberfläche und damit Angriffsfläche für das Wasser beim Begießen mit Wasser innerhalb kürzester Zeit, d.h. ohne störende Wartezeit für den Verbraucher, aufquellen zu lassen.

Die erfindungsgemäßen verpressten Formkörper quellen bei Wasserzugabe direkt in einer Pflanzform vorzugsweise formgerecht zu einem lockeren, pflanzfertigen Substrat auf. So ist nach einer bevorzugten Ausführungsform der Formkörper im Hinblick auf Form,'Volumen und Aufbau den marktgängigen Pflanzbehältern und Kulturen, wie sie beim Hobby- und Erwerbsgärtner üblich sind, optimal angepasst.

Nach einer bevorzugten Ausführungsform enthält der Formkörper mindestens 20 Gew.-%, vorzugsweise mindestens 30 Gew.-%, insbesondere mindestens 40 Gew.-%, und besonders bevorzugt mindestens 50 Gew.-% des Funktionsmaterials gemäß Anspruch 1.

Bei dem Funktionsmaterial kann es sich prinzipiell um jeden dem Fachmann auf diesem Gebiet geläufigen Holzfaserstoff, zellstoffhaltiges Material und/oder aus dem Mesokarp der Kokosnuss gewonnenes Material handeln. Vorzugsweise handelt es sich bei dem Holzfaserstoff um einen mechanisch und/oder thermomechanisch aufgeschlossenen Holzfaserstoff, insbesondere einen difibrierten oder extrudierten Holzfaserstoff. Verfahren zur Herstellung solcher Holzfaserstoffe sind dem Fachmann auf diesem Gebiet geläufig. Beispielsweise kann das in der DE 197 23 885 A1 des gleichen Anmelders beschriebene thermomechanische Verfahren verwendet werden, Z.B. wird als Ausgangsmaterial Holz unter hohem Druck und bei einer erhöhten Temperatur von etwa 60 bis 160 Grad Celsius in einem herkömmlichen Schneckenextruder zerquetscht, aufgefasert, verrieben und physikalisch aufgeschlossen. Daneben ist auch ein chemischer Aufschluss möglich. Vorzugswesie wird der Extruder so eingestellt, dass sich eine überwiegende Faserlänge von 0,5 bis 30 mm, insbesondere von 0,6 bis 15 mm einstellt.

Weiterhin bevorzugt sind zellstoffhaltige Materialien, insbesondere aus der Papierindustrie, wie ligninhaltiger oder -freier Zellstoff, zellstoffhaltige Papierfangstoffe, sowie underivatisierte oder derivatisierte Zellstoffmaterialien. Schließlich können auch aus dem Mesokarp der Kokosnuss gewonnene Materialien verwendet werden. Die Aufarbeitung dieser Materialien ist an sich bekannt. Solche Materialien können je nach Fraktionierung und Aufbereitung eine faserige oder granuläre Beschaffenheit aufweisen. Die feine Granulatform des Kokosnuss-Mesokarp besitzt gute Quelleigenschaften und ist gut wiederbenetzbar, wegen seiner krümeligen Granulatstruktur ist jedoch eine schwach verdichtete Pressform bei guter Stabilität nur unter Beimischung faseriger Funktionsstoffe zu erreichen. Nach einer bevorzugten Ausführungsform kann auch ein Gemisch aus zwei oder mehreren der vorstehenden Materialien verwendet werden. Beispielsweise kann durch einen gewissen Anteil an zellstoffhaltigen Materialien, wie zellstoffhaltigen Papierfangstoffen, ein besonders hohes Wasseraufnahmevermögen bereitgestellt werden. Durch die Verwendung von mechanisch oder thermomechanisch aufgeschlossenen Holzfaserstoffen kann eine erhöhte Festigkeit und Elastizität erzielt werden, insbesondere wenn die Holzfaserstoffe gestreckte Faserbündel mit feiner Struktur (Faserlänge zwischen etwa 0,6 bis 15 mm) aufweisen. Speziell die gestreckte Form der Faserbündel gewährleistet durch die Kapillarkräfte neben der schnellen Weiterleitung der Feuchtigkeit entlang der Fasern auch eine gute Festigkeit und Elastizität der Presskörper auch bei niedrigen Pressdichten.

Es wurde weiterhin gefunden, dass sich erfindungsgemäβ besonders vorteilhafte Formkörper ergeben, wenn der bzw. die verwendete (n) Funktionsstoff(e) nach Verpressen auf 400 g/l bei 90 Gew.-% Trockengehalt und Raumbedingungen eine Wasseraufnahme, gemessen anhand des Abtropfgewichts nach Untertauchen in Wasser für zwei Minuten, von mindestens 100 Gew.-% des Eigengewichts, vorzugsweise mindestens 300 Gew.-%, insbesondere mindestens 400 Gew.-% des Eigengewichts, aufweisen. Die Wasseraufnahme kann leicht anhand eines in einem Hohlzylinder (20 cm Durchmesser, Verpressung entlang der Zylinderachse) hergestellten verpressten Formkörpers (Höhe 5 cm) bestimmt werden. Durch Verwendung eines solchen Funktionsmaterials kann eine unerwartet hohe und rasche Quellung des Formkörpers bei Wasserzugabe sichergestellt werden. Funktionsmaterialien, die das vorstehende Quellvermögen aufweisen, können vom Fachmann aus den in Anspruch 1 genannten Materialien leicht anhand empirischer routinemäßiger Versuche herausgefunden werden. Weiterhin lässt sich beispielsweise der Energieeintrag bei der mechanischen oder thermomechanischen Aufschließung (Druck, Temperatur) der Holzfaserstoffe vom Fachmann ohne weiteres so steuern, dass das vorstehende Wasseraufnahmevermögen erreicht wird. Gleiches gilt für die Aufarbeitung des Kokosnuss-Mesokarpmaterials.

Besonders bevorzugt werden solche Funktionsmaterialien eingesetzt, die die vorstehende Wasseraufnahme bereits nach Untertauchen in Wasser über eine Minute erreichen.

Nach einer weiteren bevorzugten Ausführungsform weisen die Funktionsmaterialien bei den vorstehend für die Untersuchung der Wasseraufnahme angegebenen Bedingungen (400 g/l bei 90% Trockengehalt etc.) eine Wasserleitgeschwindigkeit von mindestens 5 cm/Minute zumindest in einer Richtung des Presskörpers auf. Vorzugsweise wird diese Wasserleitgeschwindigkeit in allen Richtungen erreicht, wodurch ein rasches und gleichmäßiges Aufquellen des Formkörpers sichergestellt wird.

Nach einer weiteren bevorzugten Ausführungsform weisen die Funktionsmaterialien bei den vorstehend für die Untersuchung der Wasseraufnahme angegebenen Bedingungen (400 g/l bei 90% Trockengehalt etc.) nach zweiminütigem Untertauchen in Wasser ein (Quell-)Volumen von mindestens 200%, vorzugsweise mindestens 300%, insbesondere mindestens 400% des Ausgangsvolumens auf. Durch dieses hohe Quellvermögen wird es ermöglicht, verhältnismäßig große Pflanzgefäße durch einen kleinen, leicht transportierbaren und handhabbaren verpressten Formkörper zu befüllen.

Besonders bevorzugt werden solche Funktionsmaterialien eingesetzt, die das vorstehende Quellvolumen bereits nach Untertauchen in Wasser über eine Minute erreichen.

Nach einer besonders bevorzugten Ausführungsform der Erfindung enthält der Formkörper mindestens etwa 30 Gew.-% mindestens eines Funktionsmaterials mit dem vorstehenden Wasseraufnahme-, Wasserleit- und Quellvermögen. So wurde überraschend gefunden, dass durch diesen Mindestgehalt an Funktionsmaterial(ien) mit dem vorstehend angegebenen Wasseraufnahme-, Wasserleit- und Quellvermögen bei einer Dichte von maximal 550 g/l des verpressten Formkörpers eine besonders hohe und spontane Quellfähigkeit, wie sie vom Verbraucher gewünscht wird, gewährleistet ist, wobei sich zusätzlich ein besonders gutes Pflanzensubstrat nach dem Quellen ergibt.

Wie vorstehend erwähnt, ergibt sich durch die Verwendung von organischem Fasermaterial als Funktionsmaterial auch bei verhältnismäßig niedrigen Dichten von maximal 550 g/l des Formkörpers eine gute Formstabilität. Als besonders geeignet haben sich als Funktionsmaterialien organische Faserstoffe mit einer Faserlänge im Bereich zwischen etwa 0,6 mm und 15 mm erwiesen.

Nach einer bevorzugten Ausführungsform enthält der Formkörper neben den vorstehend definierten Funktionsmaterialien weitere Zuschlagstoffe, die ein oder mehrere vorteilhafte Eigenschaften bewirken. Solche zusätzlichen Inhaltstoffe können in Mengen zugesetzt werden, die einerseits die vorteilhafte Wirkung sicherstellen, andererseits aber nicht die Eigenschaften der anderen Bestandteile des Formkörpers, insbesondere der Funktionsmaterialien, beeinträchtigen.

Insbesondere können neben den Funktionsstoffen enthalten sein:
a) mindestens ein Füllstoff ausgewählt aus der Gruppe bestehend aus Kompost, Humus einschließlich Rindenhumus, Torfmaterialien, Hanfschäben, porösen mineralischen Zusatzstoffen wie Liapor® und Liadrain®, insbesondere quellfähigen Tonmineralien, und/oder wasseraufnahmefähigen Polymeren.
   Alle diese Stoffe haben im wesentlichen pflanzenbauliche Aufgaen. Sie sind meist im trockenen Zustand schlecht wiederbenetzbar und/oder zeigen ein träges Quellverhalten und/oder weisen eine körnige Struktur auf. Beim Verpressen neigen sie dazu, die Pressform sehr kompakt werden zu lassen und erst bei hohen Dichten über 500 g/l entsprechende Formstabilität zu erzeugen, was aber bedeutet, dass die wichtigen Poren zur Wasserführung gefüllt werden. Entsprechend der individuellen Eigenschaften ist deshalb die Verwendung im Pressriegel mengenmäßig mehr oder weniger stark eingeschränkt. Mineralische Zusatzstoffe wie Perlite, Styropor, Blähtone usw. sind in den meisten Fällen aufgrund des störenden Einflusses auf das Pressverhalten und der problembehafteten Entsorgung nur in eingeschränkten Mengen bevorzugt. Speziell hochporöse mineralische Granulate haben aber den Vorteil, dass sie durch ihre Inkompressibilität im Formkörper beim Angießen das Wasser gut durchleiten können, und so ein Quellen von innen heraus, ähnlich den später beschriebenen Gießlöchern, fördern können. Zur Verbesserung der Wasserhaltefähigkeit und des Quellverhaltens können Tonmineralien, insbesondere pulverförmige Bentonite oder auch Superabsorber wie z.B. Polyacrylamid zugesetzt werden.
   Als Beispiel für einen klassischen organischen Hilfsstoff sei hier Torf erwähnt, weil er derzeit der Grundstoff schlechthin für die Herstellung von Substraten. Für den Pressriegel ist er jedoch nur in sehr begrenztem Maße einsetzbar. Schon ein Anteil von wenigen Gew.-% reduziert die innere Wasserleitfähigkeit durch die schlechte Wiederbenetzbarkeit beträchtlich mit entsprechend verlangsamtem Quellverhalten. Somit sollte der Gehalt an Torf in den erfindungsgemäßen Formkörpern auf maximal 50 Gew.-%, vorzugsweise 30 Gew.-%, insbesondere maximal etwa 10 Gew.-%, begrenzt werden. Als besser geeignet, speziell hinsichtlich der Wiederbenetzbarkeit und der Wasserleitfähigkeit, hat sich hier Grüngutkompost und Rindenhumus erwiesen.
b) mindestens ein Hilfstoff ausgewählt aus der Gruppe bestehend aus Düngemitteln bzw. Pflanzennährstoffen und Bindemitteln, insbesondere Stärken, Gelatinen und deren Hydrolysate, Tannine oder Ligninsulfonate, sowie aus Tensiden.

Hierunter fallen insbesondere Dünger und Bindemittel. Es hat sich gezeigt, dass durch den Einsatz von Bindemitteln beim Verpressen die Rohdichte bei gleicher Festigkeit reduziert oder alternativ der Anteil an Füllstoffen erhöht werden kann, mit dem Ziel des weiter verbesserten Quellverhaltens durch einen porenhaltigen Presskörper. Wichtig für die Wahl des Bindemittels ist, dass keine chemische Vernetzung stattfindet, die Bindemittel also quellbar bzw. wasserlöslich bleiben. Hierzu zählen alle Stärken, extrudierte Mehle, Gelatinen und Hydrolysate, Tannine, wie auch die Gruppe der Ligninsulfonate u.ä. Stoffe, wie sie dem Fachmann auf diesem Gebiet als potentielle biokompatible Bindemittel geläufig sind. Zur Aktivierung der Bindemittel ist eine gewisse Restfeuchte von ca. 20% bei den Ausgangsstoffen vorteilhaft. Gegebenenfalls kann auch durch ein kurzes Zuleiten von Heißdampf während des Pressvorgangs die Bindekraft verstärkt werden.

Alternativ kann auch eine Verpressung im Nassverfahren mit anschließender Trocknung erfolgen. Beispielsweise kann das Material aus dem Defibrator mit einem Wassergehalt von ca. 50% verpresst und beim bzw. nach dem Pressvorgang getrocknet werden. Verpressungen im Nassverfahren mit anschließender Trocknung sind dem Fachmann beispielsweise auch aus der Herstellung von Hartfaserplatten bekannt.

Es hat sich gezeigt, dass aus einer beliebigen Mischung von reinen Füllstoffen mit und ohne Presshilfsstoffen ohne Zusatz von Funktionsstoffen, wie es beim Stand der Technik derzeit der Fall ist, kein stabiler Formkörper mit einer Dichte von maximal 550 g/l erzeugbar ist, welcher den Anwendungsanforderungen entsprechen würde. Erst durch den Einsatz von Materialien aus der Gruppe der Funktionsstoffe ist die notwendige Funktionalität überhaupt erzielbar.

Je nach Eigenschaften der vorstehenden Füll- bzw. Hilfsstoffe kann die Wasseraufnahmefähigkeit, die Wasserleitfähigkeit, die Benetzbarkeit, das Quellvermögen, die Formstabilität bzw. die Qualität des gequollenen Formkörpers als Pflanzen(voll)substrat verbessert werden. So kann z.B. durch die Zugabe von Pflanzennährstoffen und/oder Düngemitteln ein optimales Pflanzenwachstum je nach Art der gewünschten Kultur sichergestellt werden. Hier zeigt sich ein weiterer Vorteil, indem die zugegebenen Nährstoffe wegen des hohen Trockengrades (> ca. 75% Trockengehalt) und der damit fehlenden mikrobiellen Aktivität nicht festgelegt werden können, wie dies bei den konventionellen erdfeuchten Substraten nach längerer Lagerung häufig der Fall ist. Alle wasserlöslichen sofort wirksamen Nährstoffe werden erst im Moment des Eingießens durch den Verbraucher in der Pflanzform gelöst und damit der Pflanze exakt zu Kulturbeginn in genau dosierter Menge zur Verfügung gestellt. Es können aber auch insbesondere ummantelte Depotdünger optimal und ohne die sonst bekannten Risiken eingesetzt werden, da auch das Depotgranulat erst dann die Nährstoffe abzugeben beginnt, wenn der Anwender den Substratriegel im Pflanzgefäß angießt und bepflanzt. Auch eine längere Lagerhaltung gefährdet die Närstoffsituation im Substratriegel also nicht. Auch die jeweils verwendeten anderen Füll- bzw. Hilfsstoffe können je nach Art der gewünschten Verwendung, z.B. der Anzucht oder Kultivierung bestimmter Pflanzen mit spezifischen Anforderungen an die Beschaffenheit des Pflanzsubstrats gewählt werden.

Nach einer besonders bevorzugten Ausführungsform enthält der Formkörper etwa 55 bis 65 Gew.-% mechanisch oder thermomechanisch aufgeschlossene Holzfaserstoffe mit dem vorstehend definierten Wasseraufnahme-, Wasserleit- und Quellvermögen, etwa 15 bis 25 Gew.-% Kompost, insbesondere Grüngutkompost, 15 bis 25 Gew.-% Rindenhumus und 2 bis 10 Gew.-% Presshilfsstoffe, insbesondere Ligninsulfonat und Bentonit. Bei dieser Mischung ist ein hervorragendes Quellverhalten bei gleichzeitig sehr guter Stabilität und Festigkeit des Presskörpers sowie guter pflanzenbaulicher Eigenschaften gegeben. Je nach Beschaffenheit der Ausgangsstoffe können die Anteile in gewissen Grenzen variiert werden.

Es wurde weiterhin überraschend gefunden, dass eine Kombination aus Faserfunktionsstoffen, insbesondere mechanisch oder thermomechanisch aufgeschlossenen Holzfaserstoffen und Kokosmesokarpmaterialien, besonders formstabile und zugleich rasch und stark quellende Presskörper ergibt. Es wird angenommen, dass hierbei die Holzfaserstoffe sowie das Kokosmesokarpmaterial mit seinen Faser- und Kurzfaser- bzw. Granulatanteilen bei der Ausbildung einer stabilen, jedoch gut wasserleitfähigen Struktur zusammen wirken. Als Kokosmesokarpmaterial hat sich insbesondere eine Mischung aus sogenannten Kokospeat und längeren Kokosfasern als vorteilhaft erwiesen.

Nach einem weiteren Aspekt betrifft die Erfindung eine Pflanzanordnung mit einem Formkörper und einem Pflanzgefäß, wobei das Volumen des Formkörpers im verpressten Zustand so berechnet ist, dass das Volumen des fertig gequollenen, wassergesättigten Formkörpers eigentlich größer ist als das zur Verfügung stehende Volumen des zur Befüllung bestimmten Pflanzgefäßes. Dabei wird das Verhältnis des lockeren, erdfeuchten (50% Trockengehalt) Formkörpermaterials vor dem Verpressen, ermittelt nach EN 125 80, zum Volumen des Pflanzgefäßes so gewählt, dass sich eine volumetrische Überfüllung des Pflanzgefäßes von etwa 1,3 bis 2,3:1 ergibt. Dies entspricht einem Verhältnis des Volumens des fertig gequollenen, wassergesättigten Formkörpers zum Volumen des Pflanzgefäßes von> 1 bis etwa 1,5. Das Endvolumen des gequollenen Formkörpers wird somit durch das vorgegebene Pflanzgefäß begrenzt, wodurch sich ein leicht verdichtetes Pflanzsubstrat ergibt. Es wurde überraschend gefunden, dass bei einer volumetrischen Überfüllung in diesem Bereich eine für das Wurzel- und Pflanzenwachstum besonders geeignete Vorverfestigung des Pflanzsubstrats ermöglicht wird. Durch die volumetrische Überfüllung gemäß der Erfindung können größere Sackungsverluste während der Kulturperiode vermieden, die Wasserkapazität und Luftporen optimiert, und nicht zuletzt der Quellgradient und folglich die Quellgeschwindigkeit bis zum Erreichen der Gefäßwände besonders schnell gestaltet werden. Auf Grund der unterschiedlichen Luftporenvolumina beziehungsweise volumengewichte der locker geschütteten Ausgangsmaterialien liegt die bevorzugte volumetrische Überfüllung bei Verwendung von Holzfaserstoffen eher im Bereich von etwa 1,7 bis 2,3:1, während bei Verwendung von Kokasmesokarpmaterialien in der Regel Verhältnisse von etwa 1,3 bis 1,9:1 bevorzugt werden.

Der Hersteller kann also schon bei der Produktion die optimale Verdichtung des Substrates in der Pflanzform vorgeben. Fehler beim Anwender durch zu leichtes, oder zu starkes Andrücken des Substrates können damit weitgehend vermieden werden. Vielmehr können die Pflanzen bzw. Sämlinge direkt in den vorverfestigten, gequollenen Formkörper, vorzugsweise über dafür vorgesehene Pflanzlöcher an der Oberseite des Formkörpers eingebracht werden und finden dort optimale Wachstumsverhältnisse vor.

Nach einem weiteren Aspekt betrifft die Erfindung somit ein Verfahren zum optimalen Befüllen eines Pflanzgefäßes mit einem verpressten Formkörper wie hierin beschrieben und in Anspruch 1 beansprucht, wobei das Volumen des Formkörpers im verpressten Zustand im Verhältnis zu dem zur Verfügung stehenden Volumen des zu befüllenden Pflanzgefäßes so gewählt wird, dass das Volumenverhältnis des lockeren, erdfeuchten (50% Trockengehalt) Formkörpermaterials vor dem Verpressen, ermittelt nach der EN 125 80, zum Pflanzgefäß zwischen etwa 1,3:1 und 2,3:1 liegt. Dies entspricht einem Verhältnis des Volumens des fertig gequollenen, wassergesättigten Formkörpers zum Volumen des Pflanzgefäßes von > 1 bis etwa 1,5.

Die hierfür erforderlichen Dimensionen des verpressten Formkörpers können anhand des ermittelten Quellvolumens des gequollenen Formkörpers vom Fachmann leicht durch routinemäßige Versuche bestimmt werden. Vorzugsweise erfolgt bei Forrnkörpern, die zum Befüllen von Pflanzgefäßen vorgesehen sind, die hauptsächliche Quellung nur in horizontaler Richtung, wodurch sich eine glatte Oberfläche des fertig gequollenen Formkörpers im Pflanzgefäß ergibt und ein Überquellen vermieden wird. Die vorzugsweise horizontale Quellung des Formkörpers kann durch eine hauptsächlich horizontale Verpressung des Materials sichergestellt werden. Vorzugsweise erfolgt dabei ein "liegendes" Verpressen und eine "stehende" Anwendung des Forkörpers sowie stirnseitiges Angießen an der Oberseite, so dass der Formkörper praktisch ausschließlich in der Horizontalen quillt. Das Quellen in der Vertikalen, also rechtwinkelig zur Pressrichtung, liegt in der Regel bei unter 5%. Eine leicht konische Pressung analog zur Form des Balkonkastens oder Pflanztopfes ist für eine gleichmäßig dichte Verteilung des Substrates nach dem Quellen möglich, aber nicht zwingend notwendig.

Wichtig ist, dass bei der Anwendung beispielsweise im Balkonkasten kein überschüssiges Wasser beim erstmaligen Angießen des Riegels abläuft, am Balkon heruntertropft und so die Anwendung sehr erschwert. Es muss also gewährleistet sein, dass die verpressten Formkörper in der Lage sind, eine anwendungsübliche Menge Wasser aus einer Gießkanne praktisch ohne sichtbare Zeitverzögerung aufzunehmen.

Nach einer besonders bevorzugten Ausführungsform ist der Formkörper und die Anwendung so konzipiert, dass der Formkörper an der parallel zur Verpressungsrichtung verlaufenden (und nicht durch die Einwirkung der Pressplatten geglätteten) verhältnismäßig rauhen und offenporigen Stirn- bzw. Oberseite angegossen wird, und dann horizontal zu den Seiten hin quellen kann.

Zusätzlich kann der erfindungsgemäße Formkörper zwei oder mehrere, vorzugsweise in der Anwendung horizontal angeordnete Schichten aufweisen, die sich in bezug auf Zusammensetzung oder Beschaffenheit unterschieden können. Z.B. kann zur besseren Drainage des Pflanzsubstrates im unteren Bereich des Formkörpers einen Ausgangsstoff von etwas gröberer Struktur eingebaut werden. Dadurch kann einer Vernässung des Substrates bei besserer Luftkapazität vorgebeugt werden.

Eine weitere bevorzugte Ausführungsform betrifft einen geschichteten Formkörper, welcher zusätzlich noch im oberen Teil mit Saatgut versetzt ist. Die Menge und Schichtverteilung des Saatgutes ist damit einstellbar. Alle Eigenschaften des Substrates werden auf die Bedürfnisse des Saatgutes und der Pflanze abgestimmt. Z.B. kann die Zusammensetzung der oberen Schicht so gewählt werden, dass sie sich besonders gut als Keimungs- bzw. Anzuchtsubstrat eignet, während die untere(n) Schicht(en) auf die Bedürfnisse der grösser gewordenen (und tiefer wurzelnden) und beispielsweise blühenden Pflanze abgestellt sind. Damit ist ein optimales Aufgehen der Saat und Gedeihen der Pflanzen bei gleichzeitiger Lagerfähigkeit des Formkörpers gegeben. Fehler bei der Anwendung können so vermieden werden.

Nach einer weiteren erfindungsgemäßen Ausführungsform sind an mindestens einer Fläche des Formkörpers, vorzugsweise zumindest an der bei der Anwendung nach oben zeigenden Stirnseite des Formkörpers, Gießlöcher vorgesehen. Die Giesslöcher werden bei der Verpressung durch geeignet geformte Stäbe aus einem im wesentlichen verformungsstabilen Material erzeugt, welche nach dem Pressvorgang wieder herausgezogen werden. Anzahl, Grösse, Tiefe und Form der Gießlöcher können beliebig variiert werden. Die Gießlöcher ragen vorzugsweise bis etwa 1 bis 5 Zentimeter über den Boden der Pressform. In diese Gießlöcher können nach einer weiter bevorzugten Ausführungsform werksseitig kleine Mengen biologisch abbaubares und natürlich nicht phytotoxisches Tensid gegeben werden. Die Gießlöcher beschleunigen im Zusammenwirken mit dem Tensid und den Funktionsmaterialien das Quellen der Formkörper zusätzlich. Soweit die Gießlöcher so groß gewählt werden, daß sie auch nach dem Aufquellen des Formkörpers noch vorhanden sind, können sie gleichzeitig als Pflanzlöcher dienen.

Nach einem weiteren Aspekt betrifft die Erfindung ein Verfahren zur Herstellung eines verpressten Formkörpers, wobei mindestens ein Funktionsmaterial, ausgewählt aus der Gruppe der Holzfaserstoffe, zellstoffhaltigen Materialien und/oder Kokosmesokarpmaterialien, vorzugsweise bei einem Gesamtwassergehalt von weniger als etwa 25 Gew.-%, insbesondere von etwa 10 bis 15 Gew.-%, auf eine Dichte von maximal 550 g/l verpresst wird. Nach einer bevorzugten Ausführungsform werden zusätzlich ein odere mehrere der in Anspruch 10 angegebenen Füll- bzw. Hilfsstoffe vor dem Verpressen mit dem mindestens einen Funktionsmaterial gründlich vermischt und anschließend auf eine Dichte von maximal 550 g/l verpresst.

Nach einem weiteren Aspekt betrifft die Erfindung die Verwendung der erfindungsgemäßen verpressten Formkörper wie in Anspruch 1 definiert zur Pflanzenanzucht und/oder -kultivierung.

Die Erfindung wird nun anhand des nachstehenden nicht beschränkten Beispiels sowie der beigefügten Zeichnungen näher erläutert.

Dabei zeigen:
Fig. 1 zeigt eine perspektivische Ansicht eines erfindungsgemäßen Formkörpers mit drei Gießlöchern;
Fig. 2 zeigt eine perspektivische Ansicht eines weiteren erfindungsgemäßen Formkörpers mit drei Gießlöchern;
Fig. 3 zeigt eine alternative Ausführungsform eines erfindungsgemäßen Formkörpers als Kegelstumpf mit einem Gießloch.

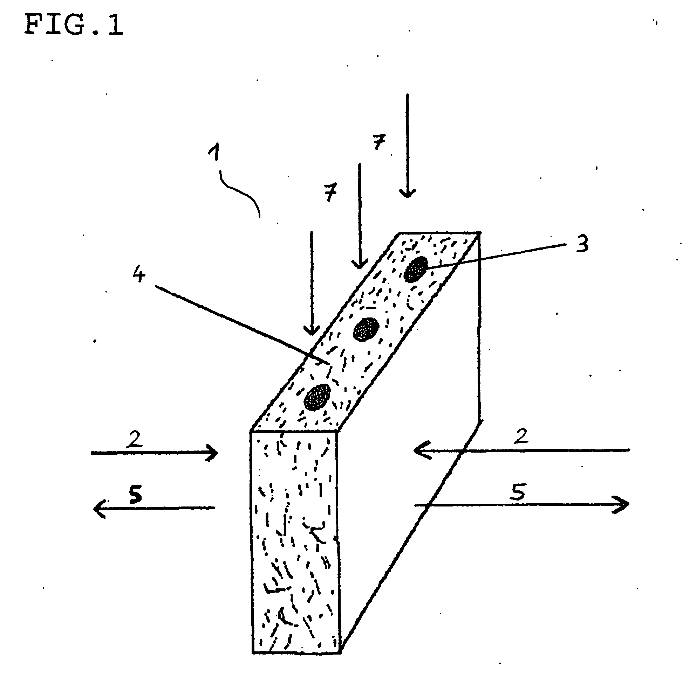

Gemäß Fig. 1 hat der Formkörper (1) eine Riegelform, wobei die Verpressung, wie durch die Pfeile (2) gekennzeichnet, horizontal von beiden Seiten erfolgte. Entsprechend erfolgt bei Zugabe von Gießwasser (7) in die Gießlöcher (3) an der eine offenporige Struktur aufweisenden Oberseite (4) des Formkörpers die Quellung ebenfalls ausschließlich horizontal nach beiden Seiten (vgl. Pfeile (5)).

Form und Volumen des Formkörpers können sich nach den handelsüblichen Größen der Pflanzgefäße richten. Die Maße typischer Balkonkästen z.B. sind mit geringen Abweichungen etwa: B = 12 cm, T = 14 cm, L = 40 - 100 cm. Die mittlere Querschnittsfläche liegt damit bei ca. 170 cm². Es ergibt sich eine rechnerische Füllmenge der Balkonkästen von 1,6 Liter pro 10 cm. Da aber das Substrat in der Pflanzform für die Kultur in verdichteter Form vorliegen sollte, ist eine volumetrische Überfüllung notwendig. Abhängig vom verwendeten Ausgangsstoff haben sich Überfüllungsverhältnisse von 1,3 : 1 bis 2,3 : 1 als sinnvoll erwiesen. Diese volumetrische Überfüllung kann über die DIN EN 12580 reproduzierbar definiert werden. Ein geeignetes Maß für den Pressriegel für Balkonkästen ist damit zum Beispiel B = 4 cm, T = 12 cm, L = 20 cm. Der Riegel quillt mit einem Faktor von mindestens 2, üblicherweise mit 3 bis 4:1 in die Breite, so dass der Balkonkasten (Pflanztopf) sauber ausgefüllt ist. Er bildet an der Oberfläche eine glatte Oberfläche und quillt nicht über, da der Presskörper durch liegendes Verpressen und stehender Anwendung sowie stirnseitigem Angießen ausschließlich in der Horizontalen quillt. Das Quellen in der Vertikalen, also rechtwinkelig zur Pressrichtung, liegt bei unter 5%.

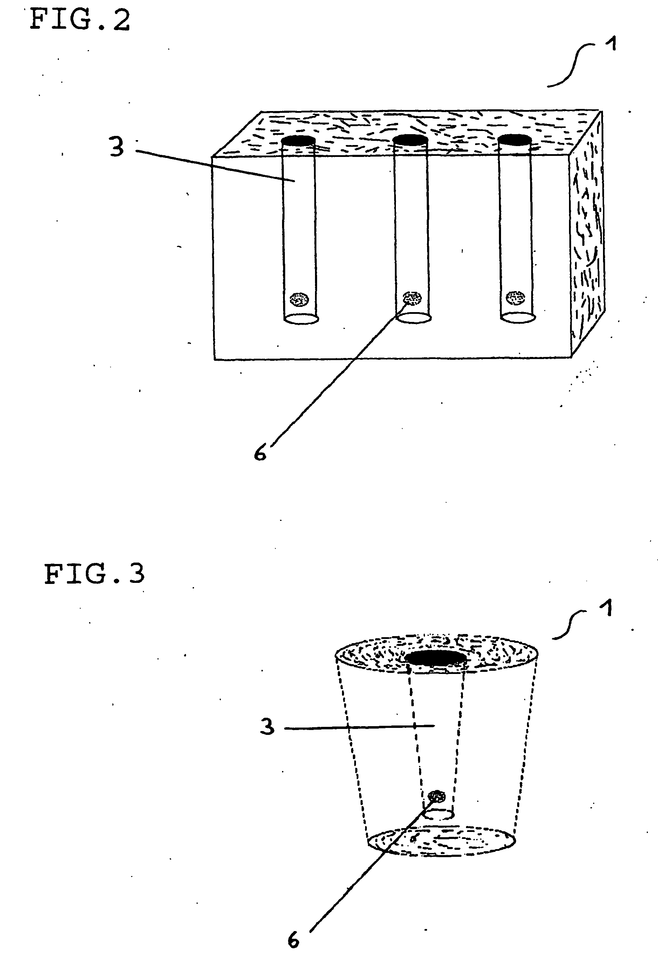

In Fig. 2 ist ein typischer erfindungsgemäßer Formkörper für Balkonkästen und Pflanzrinnen dargestellt. Dabei wurde von den typischen Maßen von Balkonkästen, d.h. einer Breite (B) von etwa 12 cm, einer Tiefe (T) von etwa 14 cm und einer Länge (L) von etwa 20 cm ausgegangen. Bei längeren Balkonkästen bzw. Pflanzrinnen kann der riegelförmige Formkörper beliebig verlängert werden. Bei einer horizontalen Quellung des Formkörpers auf das 3,0-fache wird die Breite des Formkörpers mit 5 cm gewählt. Um ein Überstehen des Formkörpers zu vermeiden, beträgt die Tiefe etwa 12 cm. Die Länge des Formkörpers beträgt etwa 20 cm. Hierdurch ergibt sich die beschriebene volumetrische Überfüllung des Pflanzgefäßes. Weiterhin sind die am Boden der Gießlöcher (3) befindlichen Tensidtropfen (6) dargestellt. In Fig. 3 ist eine entsprechende Ausführungsform des erfindungsgemäßen Formkörpers (1) für konische Pflanztöpfe vorgesehen, wobei die Form des verpressten Formkörpers entsprechend angepaßt wurde.

### Beispiel 1:

Es wurde ein Formkörper aus folgenden Bestandteilen hergestellt:
a) 70 Gew.-% thermomechanisch aufgeschlossener Holzfaserstoff, hergestellt nach dem folgenden Verfahren:
   Aus einem Dosierbunker werden einem Doppelwellen-Extruder (L:D = ca. 6) vom Typ UWAS DSA 250, der nach Angaben des Herstellers betrieben wurde, kontinuierlich Hackschnitzel der marktgängigen TMP Qualität unter Beimischung von etwa 15 Vol-% Rindenhumus zugeführt. Unter hohem Druck und bei Temperaturen um 140°C werden die Hackschnitzel durch die hohen Scherkräfte defibriert. Durch eine einstellbare Auslassdüse können der Durchsatz und die Struktur des Materials eingestellt werden. Die Einstellung muss dabei so gewählt werden, dass der Faserstoff eine möglichst wollige Konsistenz hat, bei einem Schüttgewicht nach DIN EN 12580 von ca. 80 g/Liter bei ca. 50 % TG. Das niedrige Schüttgewicht ist ein Indikator für ein hohes Luftporenvolumen und neben anderen Eigenschaften auch indirekt für gute Quelleigenschaften mit verantwortlich.
b) 20 Gew.-% Grüngutkompost
c) 10 Gew.-% Rindenhumus
d) 5 Gew.-% Ligninsulfonat und Bentonit in Pulverform als Presshilfsstoffe
e) 1,5 Gew.-% eines handelsüblichen N-P-K-Düngers (Flory 9; Firma Euflor) .

Die vorstehenden, bereits getrockneten (12% Wassergehalt) Komponenten wurden gründlich in einem herkömmlichen Trommelmischer durchmischt, um eine gleichmäßige Verteilung sicherzustellen.

Die Pressung erfolgte in einer herkömmlichen Kolbenpresse mit einem dreitaktigen Drehteller mit drei Pressbechern, welche im ersten Takt mit einer definierten Schüttmenge an Substratmischung gefühlt werden, im zweiten Schritt gepresst, und im dritten Schritt die fertige Pressform ausgeworfen wird. Das Format des Füllbechers ist: L = 24 cm, B = 20 cm, H = 28 cm (entspricht 13,44 Liter). Der Kolben drückt von oben und verdichtet das geschüttete Material im Verhältnis 5,6:1 von 28 cm auf ca. 5 cm zusammen. Die Platten mit 24 x 20 x 5 cm werden dann auseinandergeschnitten, so dass sie das herkömmliche Balkonkastenmaß von 12 cm x 20 cm x 5 cm aufweisen. Der Hydraulikdruck beträgt (maximal) 200 bar, der wirksamer Durchmesser des Presskolbens ist 160 ml. Der Pressdruck beträgt ca. 16. kg/cm², die Haltezeit 3 bis 5 Sekunden. Die Pressung erfolgte bei einer Feuchte der Gesamtmischung von 12% auf eine Dichte des Formkörpers von 350 g/l.

Die äußeren Abmessungen des verpressten Formkörpers waren:
- Breite: 5 cm
- Länge: 20 cm
- Tiefe: 12 cm
- Gewicht: ca. 420 g

Durch drei Metallstäbe mit einem Durchmesser von 15 mm wurden drei gleichmäßig beabstandete Gießlöcher mit einer Tiefe von 9 cm an der Stirnseite des Formkörpers vorgesehen und jeweils 1 Tropfen Tensid (TEGO-Alkanol L4; Firma Goldschmidt) in die Gießlöcher gegeben.

Der Formkörper wurde in ein Pflanzgefäß mit folgenden Abmessungen (T=14 cm; B=12 cm; L=20cm) eingesetzt und mit einer herkömmlichen Gießkanne etwa das 6-fache des Trockengewichts des Formkörpers an Wasser in die Gießlöcher eingefüllt. Das Wasser wurde ohne sichtbare Verzögerung vollständig aufgesogen, die Quellzeit bis zur vollständigen Ausfüllung des Pflanzgefäßes betrug weniger als eine Minute.

### Vergleichsbeispiel:

Es wurde ein weiterer Formkörper gemäß Beispiel 1 hergestellt, wobei jedoch anstelle der Komponente A 70 Gew.-% Torf (peat moss) eingesetzt wurden.

Der nach dem Verpressen auf eine Dichte von 350 g/l erhaltene Formkörper war nicht stabil und zerbröckelte sehr leicht. Selbst bei vorsichtigem Überführen in ein Pflanzgefäß zerbrach der so hergestellte Formkörper beim Übergießen mit Wasser und quoll sehr langsam, so dass das Pflanzgefäß erst nach ca. 15 Minuten vollständig ausgefüllt war. Wegen der notwendigen Löcher im Boden des Pflanzgefäßes floss der weitaus größte Teil des Wassers nach unten ab.

## Patentansprüche

1. Verpresster quellfähiger Formkörper (1), insbesondere zur Pflanzenzucht oder -kultur, enthaltend mindestens ein Funktionsmaterial, ausgewählt aus der Gruppe der Holzfaserstoffe, zellstoffhaltigen Materialien und/oder Kokosmesokarpmaterialien, mit einer Dichte von maximal 550 g/l, **gekennzeichnet durch** einen Gehalt an Torf von nicht mehr als etwa 70 Gew.-% und einer Wasseraufnahme des bzw. der Funktionsmaterialien nach Verpressen auf 400 g/l bei 90% Trockengehalt und Raumbedingungen, gemessen anhand des Abtropfgewichtes nach Untertauchen in Wasser für zwei Minuten, von mindestens 100 Gew.-% des Eigengewichts.

2. Formkörper (1) nach Anspruch 1, **dadurch gekennzeichnet, dass** die Dichte zwischen 300 g/l und 550 g/l, insbesondere zwischen 350 g/l und 450 g/l liegt.

3. Formkörper (1) nach Anspruch 1 oder 2, **dadurch gekennzeichnet, dass** mindestens 20 Gew.-%, vorzugsweise 30 bis 100 Gew.-%, insbesondere 40 bis 100 Gew.-%, besonders bevorzugt 50 bis 100 Gew.-% des Funktionsmaterials enthalten sind.

4. Formkörper (1) nach einem der vorstehenden Ansprüche, **dadurch gekennzeichnet, dass** es sich bei dem mindestens einen Funktionsmaterial um mechanisch oder thermomechanisch aufgeschlossenen Holzfaserstoff, insbesondere einen defibrierten oder extrudierten Holzfaserstoff, oder zellstoffhaltige Papierfangstoffe, underivertisierte oder deriverisierte Zellstoffmaterialien, Kokosfaserstoff oder -granulat aus dem Mesokarp der Kokosnuss oder ein Gemisch enthaltend zwei oder mehrere der vorstehenden Materialien handelt.

5. Formkörper (1) nach einem der vorstehenden Ansprüche, **dadurch gekennzeichnet, dass** der bzw. die Funktionsmaterialien nach Verpressen auf 400 g/l bei 90% Trockengehalt und Raumbedingungen eine Wasseraufnahme, gemessen anhand des Abtropfgewichts nach Untertauchen in Wasser für 2 Minuten, von mindestens 300 Gew.-%, insbesondere mindestens 400 Gew.-% des Eigengewichts aufweisen.

6. Formkörper (1) nach einem der vorstehenden Ansprüche, **dadurch gekennzeichnet, dass** die Wasseraufnahmewerte gemäß Anspruch 5 bereits nach einer Minute Untertauchen in Wasser erreicht werden.

7. Formkörper (1) nach einem der vorstehenden Ansprüche, **dadurch gekennzeichnet, dass** der bzw. die Funktionsstoffe beim Verpressen gemäß Anspruch 5 eine Wasserleitgeschwindigkeit von mindestens 5 cm/min, insbesondere mindestens 10 cm/min zumindest in eine Richtung des Presskörpers aufweisen.

8. Formkörper (1) nach einem der vorstehenden Ansprüche, **dadurch gekennzeichnet, dass** der bzw. die Funktionsstoffe nach dem Verpressen gemäß Anspruch 5 in zwei Minuten beim Untertauchen in Wasser einen Quellwert von mindestens 200%, vorzugsweise mindestens 300%, insbesondere mindestens 500% des Ausgangsvolumens aufweisen.

9. Formkörper (1) nach einem der vorstehenden Ansprüche, **dadurch gekennzeichnet, dass** als Funktionsstoff ein organischer Faserstoff mit Fasern mit einer Länge zwischen etwa 0,6 mm und 15 mm verwendet wird.

10. Formkörper (1) nach einem der vorstehenden Ansprüche, **dadurch gekennzeichnet, dass** weiterhin enthalten sind
a) mindestens ein Füllstoff ausgewählt aus der Gruppe bestehend aus Kompost, Humus einschließlich Rindenhumus, Torf, Hanfschäben, poröse mineralische zusatzstoffe, insbesondere quellbare Tonmineralien und/oder Polymere; und/oder
b) mindestens ein Hilfsstoff ausgewählt aus der Gruppe bestehend aus Düngemitteln und Bindemitteln, insbesondere Stärken, Gelatinen und deren Hydrolysate, Tannine oder Lignisulfonate.

11. Formkörper (1) nach einem der vorstehenden Ansprüche, **dadurch gekennzeichnet, dass** etwa 65 bis 75 Gew.-% thermomechanische aufgeschlossene Holzfaserstoffe, etwa 20 bis 30 Gew.-% Kompost, insbesondere Grüngutkompost, und 2 bis 10 Gew.-% Hilfsstoffe gemäß Anspruch 10 enthalten sind.

12. Formkörper (1) nach einem der vorstehenden Ansprüche, **dadurch gekennzeichnet, dass** als Funktionsstoffe eine Mischung aus mechanisch bzw. thermomechanisch aufgeschlossenen Holzfaserstoffen und Kokosmesokarpmaterial eingesetzt wird, wobei das Verhältnis zwischen Holzfaserstoffen und Kokosmesokarpmaterial zwischen etwa 1:10 und 10:1 liegt.

13. Formkörper (1) zum Befüllen eines Pflanzgefäßes nach einem der vorstehenden Ansprüche, **dadurch gekennzeichnet, dass** er gegenüber dem vorbestimmten Pflanzgefäß eine volumetrische Überfüllung zwischen etwa 1, 3:1 und etwa 2,3:1 aufweist, berechnet als das Verhältnis des Volumens des lockeren, erdfeuchten (50% Trockengehalt) Formkörpermaterials vor dem Verpressen zum Volumen des Pflanzgefäßes.

14. Formkörper (1) nach einem der vorstehenden Ansprüche, **dadurch gekennzeichnet, dass** das Ausgangsmaterial als Pflanzenvollsubstrat mit Pflanzennährstoffen und/oder Düngemitteln versehen ist.

15. Formkörper (1) nach einem der vorstehenden Ansprüche, **dadurch gekennzeichnet, dass** ein Langzeitdünger enthalten ist.

16. Formkörper (1) nach einem der vorstehenden Ansprüche, **dadurch gekennzeichnet, dass** er mehrere gleiche oder unterschiedliche Schichten aufweist.

17. Formkörper (1) nach einem der vorstehenden Ansprüche, **dadurch gekennzeichnet, dass** das Ausgangsmaterial zumindest in der oberen Schicht mit Saatgut versehen ist.

18. Formkörper (1) nach einem der vorstehenden Ansprüche, **dadurch gekennzeichnet, dass** zusätzlich ein nicht-phytotoxisches Tensid enthalten ist.

19. Formkörper (1) nach einem der vorstehenden Ansprüche, **dadurch gekennzeichnet, dass** zur Oberseite hin offene Gießlöcher (3) vorgesehen sind, wobei vorzugsweise am Boden der Gießlöcher (3) ein Tensidtropfen (6) vorgesehen ist.

20. Verfahren zur Herstellung eines verpressten Formkörpers (1), wobei mindestens ein Funktionsmaterial, ausgewählt, aus der Gruppe der Holzfaserstoffe, zellstoffhaltigen Materialien und/oder Kokosmesokarpmaterialien, bei einem Wassergehalt von weniger als 25 Gew.-%, insbesondere zwischen etwa 10 und etwa 25 Gew.-%, gegebenenfalls nach gründlicher Vermischung mit einem oder mehreren der in Anspruch 10 angegebenen Füll- bzw. Hilfsstoffe auf eine Dichte von maximal 550 g/l verpresst wird.

21. Pflanzanordnung mit einem Formkörper (1) gemäß einem der Ansprüche 1 bis 19 und einem Pflanzgefäß, wobei das Volumen des zur Herstellung des Formkörpers (1) verwendeten Materials vor der Verpressung so berechnet ist, dass das Verhältnis des Volumens dieses Ausgangsmaterials zum Volumen des Pflanzgefäßes zwischen 1,3:1 und etwa 2,3:1 liegt.

22. Verfahren zum optimalen Befüllen eines Pflanzgefäßes mit einem verpressten Formkörper (1) gemäß einem der Ansprüche 1 bis 19, wobei das Verhältnis des Volumens des zur Herstellung des Formkörpers (1) verwendeten Materials zum Volumen des zu befüllenden Pflanzgefäßes zwischen etwa 1,3:1 und etwa 2,3:1 liegt.

23. Verwendung eines Formkörpers (1) gemäß einem der Ansprüche 1 bis 19 zur Kultivierung bzw. Anzucht von Pflanzen.

## Revendications

1. Corps moulé compressé (1) gonflable, notamment pour la culture des plantes, contenant au moins un matériau fonctionnel, sélectionné parmi le groupe des matières à fibres de bois, des matériaux contenant de la cellulose et/ou des matériaux à mésocarpe de noix de coco, comprenant une densité de 550 g/l maximum, **caractérisé par** une teneur en tourbe ne dépassant pas approximativement 70 % en poids et une absorption d'eau du et/ou des matériau(x) fonctionnel(s) après compression à 400 g/l à 90 % de teneur en matière sèche et des conditions ambiantes, mesurées en s'appuyant sur le poids net égoutté après immersion dans l'eau pendant deux minutes, d'au moins 100 % en poids du poids propre.

2. Corps moulé (1) selon la revendication 1, **caractérisé en ce que** la densité se situe entre 300 g/l et 550 g/1, en particulier entre 350 g/l et 450 g/l.

3. Corps moulé (1) selon la revendication 1 ou 2, **caractérisé en ce qu'**il contient au moins 20 % en poids, de préférence 30 à 100 % en poids, en particulier 40 à 100 % en poids, de manière préférée entre toutes 50 à 100 % en poids du matériau fonctionnel.

4. Corps moulé (1) selon l'une quelconque des revendications précédentes, **caractérisé en ce que** le au moins un matériau fonctionnel est une matière à fibres de bois désagrégé de façon mécanique ou thermomécanique, en particulier d'une matière à fibres de bois défibrée ou extrudée, ou des pièges en papier contenant de la cellulose, des matériaux cellulosiques dérivés ou non, une matière ou un granulat à fibres de noix de coco provenant du mésocarpe de la noix de coco ou un mélange contenant deux des matériaux précédents ou plus.

5. Corps moulé (1) selon l'une quelconque des revendications précédentes, **caractérisé en ce que** le et/ou les matériau(x) fonctionnel(s), après compression à 400 g/l à 90 % de teneur en matière sèche et des conditions ambiantes, présentant une absorption d'eau, mesurée en s'appuyant sur le poids net égoutté après immersion dans l'eau pendant 2 minutes, d'au moins 300 % en poids, en particulier d'au moins 400 % en poids du poids propre.

6. Corps moulé (1) selon l'une quelconque des revendications précédentes, **caractérisé en ce que** les valeurs d'absorption d'eau selon la revendication 5 sont déjà obtenues après immersion d'une minute dans l'eau.

7. Corps moulé (1) selon l'une quelconque des revendications précédentes, **caractérisé en ce que** le et/ou les matériau(x) fonctionnel(s), à la compression selon la revendication 5, présentent une vitesse d'acheminement de l'eau d'au moins 5 cm/min, en particulier d'au moins 10 cm/min au moins dans une direction du corps compressé.

8. Corps moulé (1) selon l'une quelconque des revendications précédentes, **caractérisé en ce que** le et/ou les matériau(x) fonctionnel(s), après compression selon la revendication 5 en deux minutes par immersion dans l'eau, présentent une valeur de gonflement d'au moins 200 %, de préférence d'au moins 300 %, en particulier d'au moins 500 % du volume de départ.

9. Corps moulé (1) selon l'une quelconque des revendications précédentes, **caractérisé en ce qu'**une matière fibreuse organique, comprenant des fibres d'une longueur comprise entre approximativement 0,6 mm et 15 mm, est utilisée comme matière fonctionnelle.

10. Corps moulé (1) selon l'une quelconque des revendications précédentes, **caractérisé en ce qu'**il contient en outre
a) au moins une matière de remplissage sélectionnée parmi le groupe constitué du compost, de l'humus y compris l'humus d'écorce, la tourbe, la chènevotte de chanvre, les additifs minéraux poreux, en particulier les minéraux argileux gonflables et/ou les polymères ; et/ou
b) au moins un adjuvant sélectionné parmi le groupe constitué des fertilisants et des liants, notamment les amidons, les gélatines et leurs hydrolysats, les tanins ou les sulfonates de lignine.

11. Corps moulé (1) selon l'une quelconque des revendications précédentes, **caractérisé en ce qu'**il contient approximativement 65 à 75 % en poids de matières en fibres de bois désagrégées de façon thermomécanique, approximativement 20 à 30 % en poids de compost, en particulier de compost de déchets verts, et 2 à 10 % en poids d'adjuvants selon la revendication 10.

12. Corps moulé (1) selon l'une quelconque des revendications précédentes, **caractérisé en ce qu'**un mélange de matières à fibres de bois désagrégées de façon mécanique et/ou thermomécanique et de matériau à mésocarpe de noix de coco est utilisé comme matières fonctionnelles, le rapport entre les matières à fibres de bois et le matériau à mésocarpe de noix de coco se situant entre approximativement 1:10 et 10:1.

13. Corps moulé (1) destiné à remplir un bac à plantes selon l'une quelconque des revendications précédentes, **caractérisé en ce qu'**il comprend par rapport au bac à plantes prédéfini un surremplissage volumétrique compris entre approximativement 1,3:1 et approximativement 2,3:1, calculé comme le rapport du volume du matériau de corps moulé meuble, à consistance de terre humide (50 % de teneur en matière sèche) avant la compression par rapport au volume du bac à plantes.

14. Corps moulé (1) selon l'une quelconque des revendications précédentes, **caractérisé en ce que** le matériau de départ comme substrat pour plantes est pourvu d'éléments nutritifs pour plantes et/ou de fertilisants.

15. Corps moulé (1) selon l'une quelconque des revendications précédentes, **caractérisé en ce qu'**il contient un engrais de longue durée.

16. Corps moulé (1) selon l'une quelconque des revendications précédentes, **caractérisé en ce qu'**il comprend plusieurs couches identiques ou différentes.

17. Corps moulé (1) selon l'une quelconque des revendications précédentes, **caractérisé en ce que** le matériau de départ est pourvu de semences au moins dans la couche supérieure.

18. Corps moulé (1) selon l'une quelconque des revendications précédentes, **caractérisé en ce qu'**il contient en plus un agent tensioactif non phytotoxique.

19. Corps moulé (1) selon l'une quelconque des revendications précédentes, **caractérisé en ce que** sont prévus des trous d'arrosage (3) s'ouvrant sur le côté supérieur, une goutte d'agent tensioactif (6) étant prévue de préférence sur le fond des trous d'arrosage (3).

20. Procédé de fabrication d'un corps moulé compressé (1), au moins un matériau fonctionnel, sélectionné parmi le groupe des matières à fibres de bois, des matériaux contenant de la cellulose et/ou des matériaux à mésocarpe de noix de coco, dans une teneur en eau inférieure à 25 % en poids, en particulier entre approximativement 10 et approximativement 25 % en poids, éventuellement après avoir été mélangé minutieusement à un(e) ou plusieurs des matières de remplissage ou adjuvants indiqué(e)s dans la revendication 1, étant comprimé à une densité de 550 g/l maximum.

21. Dispositif de plantation comprenant un corps moulé (1) selon l'une quelconque des revendications 1 à 19 et un bac à plantes, le volume du matériau utilisé pour fabriquer le corps moulé (1) avant la compression étant calculé de sorte que le rapport du volume de ce matériau de départ par rapport au volume du bac à plantes se situe entre 1,3:1 et approximativement 2,3:1.

22. Procédé de remplissage optimal d'un bac à plantes comprenant un corps moulé comprimé (1) selon l'une quelconque des revendications 1 à 19, le rapport du volume du matériau utilisé pour fabriquer le corps moulé (1) par rapport au volume du bac à plantes à remplir se situant entre approximativement 1,3:1 et approximativement 2,3:1.

23. Utilisation d'un corps moulé (1) selon l'une quelconque des revendications 1 à 19 pour cultiver des plantes.

## Claims

1. A compressed, swellable shaped article (1), in particular for growing or cultivating plants, containing at least one functional material, selected from the group comprising wood fibre materials, cellulose-containing materials and/or coconut mesocarp materials, having a density of at most 550 g/l, **characterised by** a peat content of no more than approximately 70 wt.% and a water absorption of the functional material or materials after compression to 400 g/l at a solids content of 90% and under room conditions, measured by means of the drained weight after immersion in water for two minutes, of at least 100 wt.% of the article's own weight.

2. A shaped article (1) according to claim 1, **characterised in that** the density is between 300 g/l and 550 g/l, in particular between 350 g/l and 450 g/l.

3. A shaped article (1) according to claim 1 or claim 2, **characterised in that** it contains at least 20 wt.%, preferably 30 to 100 wt.%, in particular 40 to 100 wt.%, particularly preferably 50 to 100 wt.% of the functional material.

4. A shaped article (1) according to any one of the preceding claims, **characterised in that** the at least one functional material is mechanically or thermomechanically digested wood fibre material, in particular a defibred or extruded wood fibre material, or cellulose-containing recovered paper stock, underivatised or derivatised cellulose materials, coconut fibre or granules from the mesocarp of the coconut or a mixture containing two or more of the above materials.

5. A shaped article (1) according to any one of the preceding claims, **characterised in that**, after compression to 400 g/l at 90% solids content and under room conditions, the functional material or materials exhibit(s) a water absorption, measured by means of the drained weight after immersion in water for two minutes, of at least 300 wt.%, in particular at least 400 wt.% of the article's own weight.

6. A shaped article (1) according to any one of the preceding claims, **characterised in that** the water absorption values according to claim 5 are achieved after only one minute of immersion in water.

7. A shaped article (1) according to any one of the preceding claims, **characterised in that**, on compression according to claim 5, the functional material or materials exhibit(s) a water transport rate of at least 5 cm/min, in particular at least 10 cm/min, at least in one direction of the pressed article.

8. A shaped article (1) according to any one of the preceding claims, **characterised in that**, after compression according to claim 5 with two minutes of immersion in water, the functional material or materials exhibit(s) a swelling coefficient of at least 200%, preferably at least 300%, in particular at least 500% of the starting volume.

9. A shaped article (1) according to any one of the preceding claims, **characterised in that** an organic fibrous material is used which has fibres of a length of between approximately 0.6 mm and 15 mm.

10. A shaped article (1) according to any one of the preceding claims, **characterised in that** it additionally contains
a) at least one filler selected from the group comprising compost, humus including bark humus, peat, hemp shives, porous mineral additives, in particular swellable clay minerals and/or polymers; and/or
b) at least one auxiliary agent selected from the group comprising fertilisers and binders, in particular starches, gelatines and the hydrolysates thereof, tannins or lignosulfonates.

11. A shaped article (1) according to any one of the preceding claims, **characterised in that** it contains approximately 65 to 75 wt.% of thermomechanically digested wood fibre materials, approximately 20 to 30 wt.% of compost, in particular green waste compost, and 2 to 10 wt.% of auxiliary agents according to claim 10.

12. A shaped article (1) according to any one of the preceding claims, **characterised in that** a mixture of mechanically or thermomechanically digested wood fibre materials and coconut mesocarp material is used as the functional materials, the ratio between wood fibre materials and coconut mesocarp material being between approximately 1:10 and 10:1.

13. A shaped article (1) for filling a plant container according to any one of the preceding claims, **characterised in that** it exhibits volumetric overfill with regard to the predetermined plant container of between approximately 1.3:1 and 2.3:1, calculated as the ratio of the volume of the loose, earth-moist (50% solids content) shaped article material prior to compression to the volume of the plant container.

14. A shaped article (1) according to any one of the preceding claims, **characterised in that** the starting material takes the form of a complete plant growth medium with plant nutrients and/or fertilisers.

15. A shaped article (1) according to any one of the preceding claims, **characterised in that** it contains a sustained-release fertiliser.

16. A shaped article according to any one of the preceding claims, **characterised in that** it comprises a plurality of identical or different layers.

17. A shaped article (1) according to any one of the preceding claims, **characterised in that** the starting material is provided with seeds at least in the upper layer.

18. A shaped article (1) according to any one of the preceding claims, **characterised in that** it additionally contains a non-phytotoxic surfactant.

19. A shaped article (1) according to any one of the preceding claims, **characterised in that** watering holes (3) open at the top are provided, wherein a surfactant droplet (6) is preferably provided at the bottom of the watering holes (3).

20. A method of producing a compressed shaped article (1), wherein at least one functional material, selected from the group of wood fibre materials, cellulose-containing materials and/or coconut mesocarp materials, with a water content of less than 25 wt.%, in particular between approximately 10 and approximately 25 wt.%, is compressed, optionally after thorough mixing with one or more of the fillers or auxiliary agents indicated in claim 10, to a density of at most 550 g/l.

21. A plant arrangement having a shaped article (1) according to any one of claims 1 to 19 and a plant container, wherein the volume of the material used to produce the shaped article (1) is so calculated prior to compression that the ratio of the volume of this starting material to the volume of the plant container is between 1.3:1 and approximately 2.3:1.

22. A method for optimum filling of a plant container with a compressed shaped article (1) according to any one of claims 1 to 19, wherein the ratio of the volume of the material used to produce the shaped article (1) to the volume of the plant container to be filled is between approximately 1.3:1 and approximately 2.3:1.

23. Use of a shaped article (1) according to any one of claims 1 to 19 to cultivate or grow plants.
